# EUROPEAN PATENT SPECIFICATION

(11) **EP 0 337 150 B1**
(45) Date of publication and mention of the grant of the patent: **28.04.1993**
(21) Application number: 89104721.9
(22) Date of filing: 16.03.1989
(51) Int. Cl.: B01D 53/18, B01D 3/28, F28F 25/08

(54) **Structured column packing with liquid holdup**
Kolonnenpackung mit Profilierung zum Zurückhalten von Flüssigkeit
Garnissage de colonne comportant un profile à rétention de fluide

(30) Priority: 17.03.1988 US 169592
(43) Date of publication of application: 18.10.1989
(73) Proprietor: PRAXAIR TECHNOLOGY, INC., Danbury, CT 06810-5113 (US)
(72) Inventor: Lockett, Michael James, Grand Island (14072), N.Y. (US); Victor, Richard Amory, Grand Island (14072), N.Y. (US)
(74) Representative: Schwan, Gerhard, Dipl.-Ing.

(56) References cited:
- DE-C- 1 053 469
- GB-A- 2 055 613
- US-A- 4 186 159
- US-A- 4 296 050

## Description

### Technical Field

This invention relates generally to structured column packing and in particular to structured column packing having a textured surface.

### Background Art

In a column, such as a distillation or an absorption column, mass transfer is carried out by the upflow of vapor against countercurrent downflow of liquid. In order to enhance the effectiveness of the mass transfer while avoiding a large pressure drop across the column, packing may be employed within the column. The packing may be random packing or structured packing. Structured packing is preferred for more rigorous separations such as the cryogenic distillation of air into nitrogen, oxygen or other atmospheric gases.

Generally structured packing comprises a corrugated sheet of metal or other suitable material. The sheets are vertically oriented within a column with the corrugations at an angle to the column axis. Generally this angle is about 45 degrees. The sheets are stacked within the column side by side such that each sheet has adjacent sheets on which the corrugations are reversed in direction relative to the vertical axis of the column. The height of each stack of packing is generally within the range of from 150 to 250 mm (6 to 10 inches) and each stack is placed in the column with the direction of its metal sheets at an angle, generally 90 degrees, to the stacks immediately above and below it. The sheets may contain perforations to allow liquid to pass freely onto both sides of the sheets and also to equalize vapor flow in the channels formed between adjacent sheets.

Another known structured column packing (DE-A-1 053 469) is composed of corrugated members which are disposed horizontally across the column to form a kind of honeycomb structure. The corrugated members are provided with openings for liquid and vapor flow, wherein down-flowing liquid will collect in troughs or pockets formed by the corrugations beneath the openings. The path of gases upward through the column is determined by the location of the openings which are alternately at one side of a zigzag and then the other. This results in a tortuous course of the gases and causes them to repeatedly impinge on the underside of the corrugations below the pockets. Liquid collecting in the pockets overflows through the openings in the form of thinfilms which spread on the underside of the pockets and are exposed to impingement by the rising gases to thereby promote intimate contact between vapor and liquid.

A recent advance in structured column packing is the packing disclosed in US-A-4 186 159 and in US-A-4 296 050 from the latter of which claim 1 starts in the pre-characterizing portion thereof. This prior packing is characterized by fine fluting on the surface of a coarsely corrugated packing sheet. The fluting is a roughening of the sheet surface by grooving or by the impression of a pattern, for example a herring bone pattern, and serves to improve liquid distribution over the sheet surface by capillary action and channelling. The predominant mechanism causing liquid to spread laterally over the packing surface is weak surface tension forces acting along the flutes. In the prior packing the angle between the longitudinal axis of the fine flutes and the vertical or column axis is between 15° and 90°. The angle at which the flute elevations are disposed with respect to the sheet is not numerically defined in the specification of US-A-4 186 159 and US-A-4 296 050, but is shown in Fig. 1a of these documents to be an obtuse angle of considerably more than 90°. The liquid holdup on the prior packing sheet is relatively small.

Since liquid holdup on the packing sheet will increase the vapor-liquid contact time and thus the mass transfer effectiveness, it is desirable to have structured column packing which enables liquid holdup on the packing surface which exceeds that possible with presently available packing.

Accordingly it is an object of this invention to provide improved fluted structured column packing which enables improved liquid holdup of downflowing liquid along its surface.

It is another object of this invention to provide improved fluted structured column packing which enables increased liquid-vapor contact time for liquid and vapor flowing countercurrently through a given height of packing.

It is further object of this invention to provide improved fluted structured column packing which enables increased mass transfer through a given height of packing without a significant increase in vapor pressure drop over the given height.

### Summary of the Invention

The above and other objects which will become apparent to one skilled in the art upon a reading of this disclosure are attained by the present invention one aspect of which is:
A column packing element comprising a sheet having coarse corrugations and a plurality of fine flutes laterally disposed on said sheet, each of said fine flutes comprising an elevation with respect to said sheet, characterized in that the elevation is disposed at an angle to said sheet such that when the packing element is vertically oriented, the elevation angle is within the range of from 45 to 85 degrees whith respect to the vertical thereby forming a shelf along the sheet sufficient to cause liquid flowing down the packing element to form a pool on said shelf.

Another aspect of the present invention is:
A method for carrying out mass transfer between vapor and liquid comprising countercurrently passing vapor up and passing liquid down a column containing a plurality of packing elements as claimed in claim 1 and vertically disposed within said column, said packing elements each comprising a sheet having coarse corrugations and a plurality of fine flutes laterally disposed on said sheet, each said flute comprising an elevation with respect to said sheet, the elevation disposed at an angle of within the range of from 45 to 85 degrees with respect to the vertical thereby forming a shelf along the sheet, and forming a pool comprised of downflowing liquid on the shelf.

The term, "column", as used herein means a contacting column or zone wherein liquid and vapor phases are countercurrently contacted to effect separation of a fluid mixture by contacting of the vapor and liquid phases on packing elements within the column. For a further discussion of distillation columns see the Chemical Engineers' Handbook. Fifth Edition, edited by R.H. Perry and C.H. Chilton, McGraw-Hill Book Company, New York, Section 13, "Distillation" B.D. Smith et al, page 13-3 The Continuous Distillation Process.

### Brief Description Of The Drawings

Figure 1 is a perspective view of a sheet of fluted structured column packing.

Figure 2 is a detailed view of a known fluted structured column packing.

Figure 3 is a cross-sectional detail view of one embodiment of the fluted structured column packing of the invention.

Figure 4 is a cross-sectional detail view of another embodiment of the fluted structured column packing of the invention.

Figure 5 is a cross-sectional detail view of a third embodiment of the fluted structured column packing of the invention.

Figure 6 is a cross-sectional detail view of an embodiment of the fluted structured column packing of the invention showing the liquid holdup.

### Detailed Description

The invention will be described in detail with reference to the Drawings.

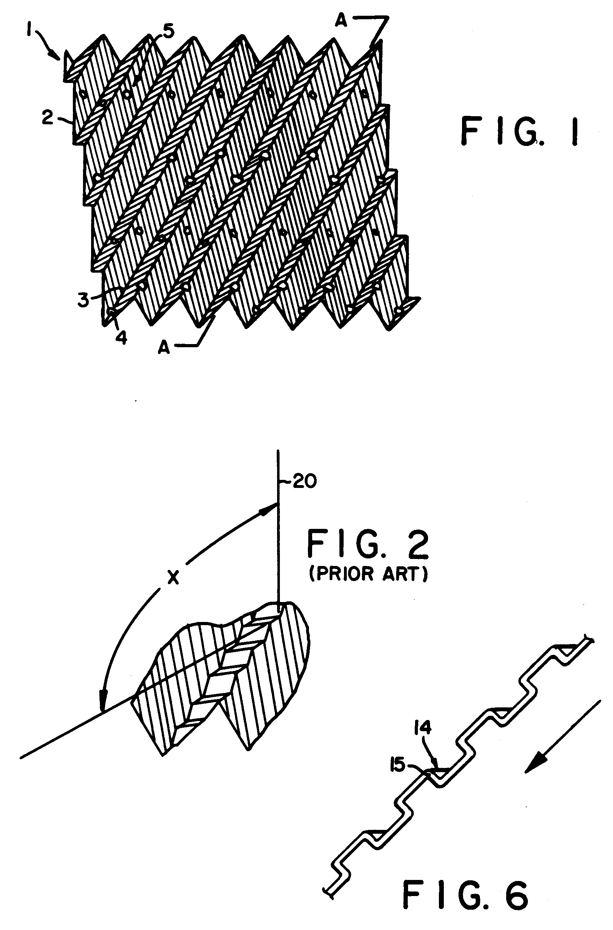

Referring now to Figure 1 column packing element 1 comprises a corrugated sheet 2 having coarse corrugations 3 oriented at an angle to the vertical. The angle is generally within the range of from 15 to 60 degrees. The angle of the corrugations of the packing element illustrated in Figure 1 is 45 degrees. Corrugated sheet 2 is preferably made of metal such as aluminum or steel. Other materials suitable for use to fabricate corrugated sheet 2 include non-metallic materials such as plastic or fiberglass.

Corrugated sheet 2 may contain one or more perforations, such as shown at 4, to allow liquid to pass onto both sides of the sheet and equalize vapor flow.

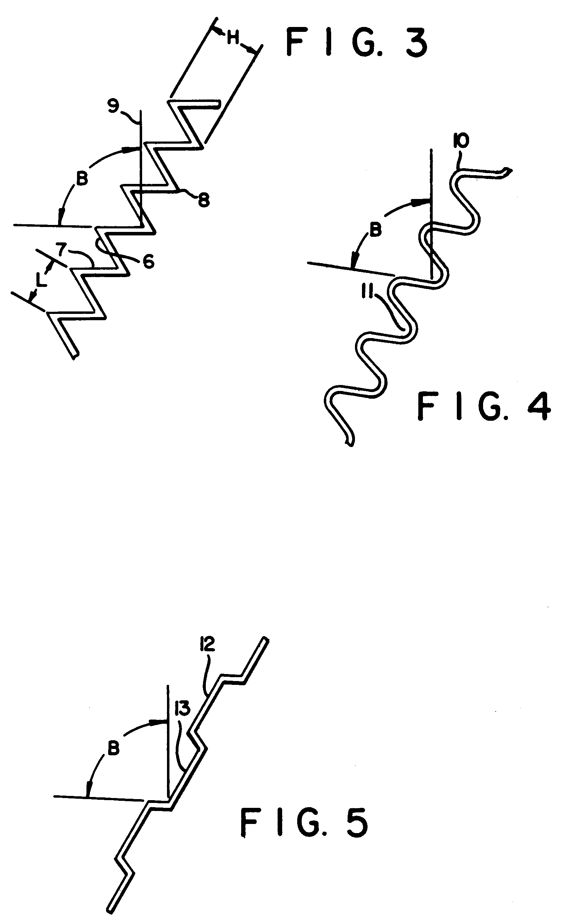

Corrugated sheet 2 contains a plurality of fine flutes 5 laterally disposed on the sheet. Three embodiments of the flutes of the present invention are shown in Figures 3-5 which show the flute as they would look in cross-section of a detail of Figure 1 taken along line A-A.

Referring now to Figure 3, flutes 6 each comprise an elevation 7 with respect to sheet 8. The elevation is disposed at an angle to the sheet such that, when the packing element is vertically oriented, the angle B formed by the elevation to the vertical 9 is within the range of from 45 to 85 degrees.

The flutes of the packing element of the invention have a height H from trough to peak generally within the range of from 0.05 to 10 millimeters, preferably within the range of from 0.5 to 2.0 millimeters, and a lateral length L from peak to peak generally within the range of from 0.5 to 10.0 millimeters.

Figures 4 and 5 illustrate two other embodiments of the flutes of the packing element of the invention. Whereas the flutes illustrated in Figure 3 are characterized by sharp angled peaks and troughs, the flutes illustrated in Figure 4 have curved peaks 10 and troughs 11 and the flutes illustrated in Figure 5 have peaks 12 and troughs 13 which have flat surfaces. Generally, any particular packing element will have a single type of flute; however different types of flutes may, if desired, be on the same packing element. Although the embodiments illustrated in Figures 3-5 are all two-sided, one-sided embodiments are acceptable alternatives. For example, the packing element could have flutes on the upper surfaces and a flat surface on the underside. Another alternative could have flutes on both sides, but with material thickness between the two sides.

In each case elevation 7 forms a shelf or ledge along the sheet. As liquid flows down the packing element in the direction of the arrow, the angle of the shelf with respect to the vertical causes the liquid to form a pool 14 on the shelf 15, such as shown in Figure 6. This pooling of the liquid causes several advantageous effects to occur. First, the liquid is more effectively spread over the surface of the packing. Since the liquid is physically contained by the shelf or ledge, it tends to flow laterally over the packing surface until it spills over the shelf or ledge edge. Second, pooling increases liquid holdup allowing for longer liquid-vapor contact time through a given height of packing. Third, the pooling more effectively mixes the downwardly flowing liquid. Fourth, the liquid film passing down the packing element is more effectively disrupted by the flow over the shelf or ledge edge bringing fresh liquid to the surface and thus better promoting mass transfer. The overall result of these advantages is increased mass transfer as indicated by a reduction in HETP (height equivalent to a theoretical plate) without an increase in vapor pressure drop per theoretical plate.

For comparative purposes there is illustrated in Figure 2 a detail view of the fluting of the heretofore available fluted structured column packing as disclosed in US-A-4 186 159 and US-A-4 296 050. As is clearly seen from Figure 2, the elevation of the flutes forms an angle X which clearly exceeds 90 degrees from the vertical 20. Thus the flutes cannot cause the downflowing liquid to form pools and therefore the advantageous results of such pooling cannot be attained by this heretofore available fluted structured column packing.

The following is presented to further illustrate the invention and the advantages attainable thereby.

A liquid mixture comprising about 65 to 85 percent oxygen and 15 to 35 percent nitrogen was separated using low temperature fractional distillation in a test column having an internal diameter of 100 mm (4 inches) and having packing in a packing height of 76 cm (30 inches). The packing was structured packing of corrugated aluminum having a surface area density of 460 m²/m³ (140 square feet per cubic foot) and set vertically in the column so that the corrugations were at an angle of 45 degrees to the column axis. The packing had fluting of the type illustrated in Figure 5. The fluting height was 0.25 millimeters, the fluting length was 3.5 millimeters and the elevation angle was about 85 degrees. The column was operated at total reflux at a pressure of 1.7 bar (25 pounds per square inch absolute). The column was operated at several different vapor flowrates and measurements were taken at each such vapor flowrate.

For comparative purposes a procedure similar to that described above was carried out except that the packing was commercially available packing of the type illustrated in Figure 2. The packing was made of corrugated aluminum having a surface area density of 446 m²/m³ (136 square feet per cubic foot) and was set vertically in the column with the corrugations set at an angle of 45 degrees to the column axis.

The performance of the two packings was measured by obtaining the HETP for each packing at a range of column capacity factors from 0.027 to 0.043 m/s (0.09 to 0.14 feet/second). A theoretical plate is defined as a discrete contacting stage for the liquid and gas phases so that the exiting liquid and gas are in mass transfer equilibrium. The capacity factor is defined as the product of the superficial vapor velocity and the square root of the ratio of the vapor density divided by the difference between the liquid and vapor densities. For measurements over the entire capacity range, the improved structured column packing of the invention enabled better mass transfer performance as demonstrated by its HETP of about 0.9 compared to the normalized HETP value of 1.0 for the commercially available structured column packing.

It is thus shown that the improved structured column packing with the liquid holdup of the present invention provided a reduction of about 10 percent in HETP over that attainable by the heretofore available fluted structured column packing.

## Claims

1. A column packing element (1) comprising a sheet (2, 8) having coarse corrugations (3) and a plurality of fine flutes (5, 6) laterally disposed on said sheet, each of said fine flutes comprising an elevation (7) with respect to said sheet (2), **characterized in that** the elevation (7) is disposed at an angle to said sheet (2) such that when the packing element (1) is vertically oriented, the elevation angle (B) is within the range of from 45 to 85 degrees with respect to the vertical thereby forming a shelf (15) along the sheet (2) sufficient to cause liquid flowing down the packing element (1) to form a pool (14) on said shelf (15).

2. The column packing element of claim 1 wherein each said flute (5, 6) has a height (H) within the range of from 0.05 to 10.0 millimeters.

3. The column packing element of claim 1 wherein each said flute (5, 6) has a lateral length (L) from peak to peak within the range of from 0.5 to 10.0 millimeters.

4. The column packing element of claim 1 wherein the flutes (6) comprise sharp angled peaks and troughs.

5. The column packing element of claim 1 wherein the flutes comprise curved peaks (10) and troughs (11).

6. The column packing element of claim 1 wherein the flutes comprise flat surfaced peaks (12) and troughs (13).

7. The column packing element of claim 1 wherein the corrugated sheet (2, 8) is made of metal.

8. The column packing element of claim 7 wherein the metal is aluminum.

9. The column packing element of claim 1 wherein the corrugated sheet (2, 8) contains one or more perforations (4).

10. A method for carrying out mass transfer between vapor and liquid comprising countercurrently passing vapor up and passing liquid down a column containing a plurality of packing elements (1) as claimed in claim 1 and vertically disposed within said column, said packing elements each comprising a sheet (2, 8) having coarse corrugations (3) and a plurality of fine flutes (5, 6) laterally disposed on said sheet, each said flute comprising an elevation (7) with respect to said sheet, the elevation disposed at an angle (B) within the range of from 45 to 85 degrees with respect to the vertical (9) thereby forming a shelf (15) along the sheet, and forming a pool (14) comprised of downflowing liquid on the shelf.

11. The method of claim 10 wherein the vapor and liquid are each comprised of oxygen and nitrogen.

## Patentansprüche

1. Kolonnenpackungselement (1) mit einer Platte (2, 8), die eine grobe Wellung (3) und eine Mehrzahl von feinen Rillen (5, 6) aufweist, die seitlich auf der Platte angeordnet sind, wobei jede der feinen Rillen eine Erhöhung (7) mit Bezug auf die Platte (2) aufweist, dadurch gekennzeichnet, daß die Erhöhung (7) in einem solchen Winkel mit Bezug auf die Platte (2) angeordnet ist, daß bei lotrechter Ausrichtung des Packungselements (1) der Winkel (B) der Erhöhung im Bereich von 45 bis 85 Grad mit Bezug auf die Lotrechte liegt, wodurch entlang der Platte (2) ein Vorsprung (15) gebildet wird, der ausreicht, um entlang dem Packungselement (1) nach unten fließende Flüssigkeit zu veranlassen, auf dem Vorsprung (15) einen Pool (14) zu bilden.

2. Kolonnenpackungselement nach Anspruch 1, wobei jede der Rillen (5, 6) eine Höhe (H) im Bereich von 0,05 bis 10,0 mm hat.

3. Kolonnenpackungselement nach Anspruch 1, wobei jede der Rillen (5, 6) eine seitliche Länge (L) von Spitze zu Spitze im Bereich von 0,5 bis 10,0 mm hat.

4. Kolonnenpackungselement nach Anspruch 1, wobei die Rillen (6) scharfwinklige Spitzen und Mulden aufweisen.

5. Kolonnenpackungselement nach Anspruch 1, wobei die Rillen gekrümmte Spitzen (10) und Mulden (11) aufweisen.

6. Kolonnenpackungselement nach Anspruch 1, wobei die Rillen Spitzen (12) und Mulden (13) mit flacher Oberfläche aufweisen.

7. Kolonnenpackungselement nach Anspruch 1, wobei die gewellte Platte (2, 8) aus Metall gefertigt ist.

8. Kolonnenpackungselement nach Anspruch 7, wobei das Metall Aluminium ist.

9. Kolonnenpackungselement nach Anspruch 1, wobei die gewellte Platte (2, 8) eine oder mehrere Perforationen (4) aufweist.

10. Verfahren zur Durchführung eines Stoffüberganges zwischen Dampf und Flüssigkeit, bei dem im Gegenstrom Dampf nach oben und Flüssigkeit nach unten in einer Kolonne geleitet werden, die eine Mehrzahl von Packungselementen (1) gemäß Anspruch 1 enthält, die innerhalb der Kolonne lotrecht angeordnet sind, wobei die Packungselemente jeweils eine Platte (2, 8) mit einer groben Wellung (3) und eine Mehrzahl von feinen Rillen (5, 6) aufweisen, die seitlich auf der Platte angeordnet sind, wobei jede der Rillen eine Erhöhung (7) mit Bezug auf die Platte aufweist und die Erhöhung in einem Winkel (B) im Bereich von 45 bis 85 Grad mit Bezug auf die Lotrechte (9) angeordnet ist, um dadurch einen Vorsprung (15) entlang der Platte zu bilden, und wobei auf dem Vorsprung ein Pool (14) aus nach unten strömender Flüssigkeit ausgebildet wird.

11. Verfahren nach Anspruch 10, wobei der Dampf und die Flüssigkeit aus Sauerstoff bzw. Stickstoff bestehen.

## Revendications

1. Elément (1) de garnissage de colonne comportant une feuille (2, 8) ayant des ondulations grossières (3) et plusieurs cannelures fines (5, 6) disposées latéralement sur ladite feuille, chacune desdites cannelures fines comprenant une élévation (7) par rapport à ladite feuille (2), caractérisé en ce que l'élévation (7) est disposée de façon à former un angle avec ladite feuille (2) afin que, lorsque l'élément de garnissage (1) est orienté verticalement, l'angle (B) de l'élévation soit dans la plage de 45 à 85° par rapport à la verticale, formant ainsi un rebord (15) le long de la feuille (2) suffisant pour amener un liquide, descendant en s'écoulant sur l'élément (1) de garnissage, à former un bain (14) sur ledit rebord (15).

2. Elément de garnissage de colonne selon la revendication 1, dans lequel chacune desdites cannelures (5, 6) a une hauteur (H) dans la plage de 0,05 à 10,0 millimètres.

3. Elément de garnissage de colonne selon la revendication 1, dans lequel chacune desdites cannelures (5, 6) a une longueur latérale (L) entre crêtes comprise dans la plage de 0,5 à 10,0 millimètres.

4. Elément de garnissage de colonne selon la revendication 1, dans lequel les cannelures (6) comprennent des crêtes et des creux à angles vifs.

5. Elément de garnissage de colonne selon la revendication 1, dans lequel les cannelures comprennent des crêtes (10) et des creux (11) arrondis.

6. Elément de garnissage de colonne selon la revendication 1, dans lequel les cannelures comprennent des crêtes (12) et des creux (13) à surfaces plates.

7. Elément de garnissage de colonne selon la revendication 1, dans lequel la feuille ondulée (2, 8) est réalisée en métal.

8. Elément de garnissage de colonne selon la revendication 7, dans lequel le métal est de l'aluminium.

9. Elément de garnissage de colonne selon la revendication 1, dans lequel la feuille ondulée (2, 8) contient une ou plusieurs perforations (4).

10. Procédé pour réaliser un transfert de masse entre une vapeur et un liquide, consistant à faire monter de la vapeur et descendre un liquide à contre-courant dans une colonne contenant plusieurs éléments de garnissage (1) selon la revendication 1 et disposés verticalement à l'intérieur de ladite colonne, lesdits éléments de garnissage comprenant chacun une feuille (2, 8) ayant des ondulations grossières (3) et plusieurs cannelures fines (5, 6) disposées latéralement sur ladite feuille, chacune desdites cannelures comprenant une élévation (7) par rapport à ladite feuille, l'élévation étant disposée de façon à former un angle (B) dans la plage de 45 à 85° par rapport à la verticale (9), afin de former un rebord (15) le long de la feuille, et à former sur le rebord un bain (14) constitué de liquide descendant en s'écoulant.

11. Procédé selon la revendication 10, dans lequel la vapeur et le liquide sont constitués chacun d'oxygène et d'azote.
